Europäisches Patentamt

European Patent Office

Office européen des brevets

(11) Publication number: **0 471 430 A2**

# EUROPEAN PATENT APPLICATION

(21) Application number: **91302237.2**

(22) Date of filing: **15.03.91**

(51) Int. Cl.⁵: **B32B 15/08**, B29C 65/02, C08J 5/12

(30) Priority: **13.07.90 JP 186621/90**

(43) Date of publication of application:
**19.02.92 Bulletin 92/08**

(84) Designated Contracting States:
**DE FR GB**

(71) Applicant: **TOYO SEIKAN KAISHA LIMITED**
**3-1, Uchisaiwai-cho 1-chome Chiyoda-ku**
**Tokyo(JP)**

(72) Inventor: **Kurashima, Hideo**
**26-16 Iwato 3-Chome**
**Yokosuka-city, Kanagawa Prefucture(JP)**
Inventor: **Ishibashi, Kazuhisa**
**55-12-505 Sangenjyaya 2-Chome,**
**Setagaya-ku**
**Setagaya-ku, Tokyo(JP)**
Inventor: **Sato, Harumi**
**25 Sachigaoka, Asahi-ku**
**Yokohama-city, Kanagawa Prefecture(JP)**

(74) Representative: **Charlton, Peter John et al**
**Elkington and Fife Prospect House 8**
**Pembroke Road**
**Sevenoaks, Kent TN13 1XR(GB)**

(54) **Method of curing an adhesive in a laminate coil.**

(57) The reactive curing type adhesive in the coil of a laminate comprising metallic foil and plastic film layers bonded to each other with the adhesive, is cured by supplying an electric current to the metallic foil layer between the outer end and the inner end of the coil, and resistance heating the metallic foil layer, at least until the coil has been heated to about the curing temperature. The control of the resistance heating may be conducted based on the electric resistance of the metallic foil layer between the outer end and the inner end of the coil.

FIG. I

The present invention relates to a method of curing the adhesive of a laminate in a coil form which laminate is used to make a retort pouch or the like and comprises metallic foil and plastic film layers.

A laminate for a retort pouch, e.g. "RP-F"(trade name of TOYO SEIKAN KAISHA, Ltd.) has a three - layered structure comprising a saturated polyester film - a metallic foil which is generally an aluminum foil - a polyolefin film, or a four - layered structure comprising a saturated polyester film - a nylon film - a metallic foil - a polyolefin film, the layers being bonded to each other with an isocyanate type adhesive.

The lamination of the laminate of this type is carried out by a so-called "dry laminating method", and the laminate is wound up into a coil form at about 20 to 30 °C. The laminate coil is conventionally stored in a thermostatic chamber, that is, a constant temperature chamber, which has an large inner capacity, e.g. of about 1,600 m$^3$, and is kept at about 50 °C, for four to seven days so as to improve the heat resistance of the adhesive (refer, for example, to Japanese Patent Laid-Open No. 81391/1977).

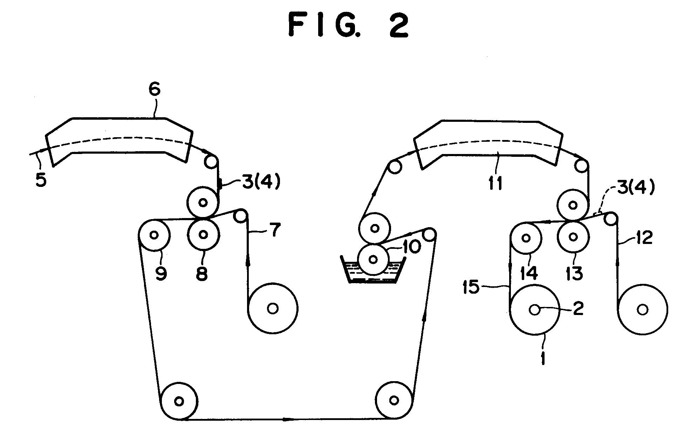

Since wrinkles will occur in the coil if the laminate heated to an elevated temperature through a drying oven (refer to reference numeral 11 in Fig. 2) in a dry laminating apparatus is wound up at the above elevated temperature, the laminate is generally wound up into a coil after it has been cooled to about 20 to 30 °C, as above-mentioned.

While the coil is stored in the thermostatic chamber, the coil temperature rises due to heat conduction. However, in case of a relatively large coil, e.g. having the outer diameter of about 60 to 100 cm, the inner diameter of about 20 cm and width of about 100 cm, about two days are necessary for the slowest temperature rise portion of the coil, which is usually about the center in both width-wise and thickness-wise directions of the coil, to be heated to 50 °C which is a curing temperature.

Since a minimum necessary curing time of an isocyanate type adhesive at 50 °C is about three days, in this case the coil must be stored for five days in the thermostatic chamber.

Storage in the thermostatic chamber for such a long period lowers productivity, and poses a problem that such a big thermostatic chamber as above-mentioned is needed when a large number of coils are to be cured to produce a large quantity of the laminate.

The present invention seeks to provide a method of curing an adhesive of a laminate coil, comprising metallic foil and plastic film layers bonded to each other with a reactive curing type adhesive such as an isocyanate type adhesive, wherein the time to be heated up to a curing temperature, and/or the curing time, and/or a cooling time after the curing are reduced, and thus the time necessary for curing as a whole is decreased to improve productivity, and a thermostatic chamber may not be needed, or its capacity may be reduced.

The term "reactive curing type adhesive" used in the description denotes the type of the adhesive which is cured by a chemical reaction, such as an epoxy type adhesive, an isocyanate type adhesive, an urethane type adhesive, and their mixtures or the like. The curing rate of the adhesive of the above type is promoted by heating.

The present invention provides a method of curing a reactive curing type adhesive in a laminate coil comprising metallic foil and plastic film layers bonded to each other with the adhesive, which is characterized in that a current is supplied to the metallic foil layer between the outer end and the inner end of the coil, so as to resistance heat the metallic foil layer, at least until the coil has been heated to about the curing temperature.

In the description the term "the outer end of the coil" includes the portion near the outer end of the coil, and the term "the inner end of the coil" likewise includes the portion near the inner end of the coil.

In case where the resistance heating of the metallic foil layer, that is, "internal heating" is conducted by supplying a current to the metallic foil layer between the outer end and the inner end of the coil at least until the coil has been heated to about the curing temperature, the curing temperature such as 50 °C can be reached in about 30 to 90 minutes.

Accordingly, the time for attaining the curing temperature can be reduced drastically, and the time necessary for the curing as a whole can be shortened. Therefore, when the coil heated to about the curing temperature is cured by placing it into a thermostatic chamber, the capacity thereof may be reduced.

A core for winding up a laminate web into a coil is preferably composed of a metallic pipe. Although a relatively economical paper tube core with a paper thickness of about 20 to 25 mm has been conventionally employed, the paper tube core involves a drawback in that, since the plastic film in the laminate drawn lengthwise in a laminating process shrinks by heating during curing, the paper tube core is compressed by the laminate coil and tends to collapse, which will lead to transverse wrinkles in the laminate coil after curing. The metallic pipe core may withstand the compression, and the transverse wrinkles will not be liable to occur when it is used.

In case where the internal heating is conducted during the temperature rise period and the curing period, it is preferable that the portions of the coil near the outer peripheral surface, the side surfaces and/or near the inner peripheral surface thereof are heated externally at least during the curing period, so that the whole laminate coil is kept at the curing temperature.

Owing to heat radiation, the temperature rises during the resistance heating are slow at the portions of the coil near the outer peripheral surface, the side surfaces and the inner peripheral surface thereof, and the temperatures at the above portions drop during the curing period, so that the above portions may be susceptible to insufficient curing.

However, the coil may be cured at a substantially uniform temperature as a whole by heating externally the portions of the coil near the outer peripheral surface, the side surfaces and/or the inner peripheral surface thereof at least during the curing period.

Besides the thermostatic chamber, a flexible thermal membrane or a thermal box both incorporating a heat generating element, or the like may be used as an external heating means. By conducting the resistance heating and using the external heating means of the above types conjointly, curing may be carried out without using the thermostatic chamber.

It is practically impossible for operators to enter the thermostatic chamber held at 80 ° C or 100 ° C, and conduct operations such as carrying the coil. Accordingly, when a thermostatic chamber is used, it is practically impossible to set the temperature in the thermostatic chamber to 80 ° C or 100 ° C. However, when the thermal membrane or the like is employed, the curing temperature may be set to 80 ° C or 100 ° C.

In this case, the actual curing time may be reduced drastically. In the other words, while a minimum necessary curing time at 50 ° C is three days, the time may be only one day in case of 80 ° C.

After curing it is preferable to cool forcibly the coil. It is preferable that the forced cooling is carried out by bringing the uncoiled portion of a laminate web into contact with a cooling roll while the coil is uncoiled.

The forced cooling after curing the adhesive can reduce the overall curing time further. In case where the forced cooling is effected by bringing the uncoiled portion of the coil into contact with the cooling roll while the coil is uncoiled, the cooling time is equal to the uncoiling time, and hence the cooling time is reduced drastically.

The supply current for the resistance heating may be preferably a D.C. current. If the D.C. current is supplied, the supply of reactive power is not necessary, and the power efficiency may be improved.

In case where the supply current is a A.C. current, it is preferable that the current is supplied in such a manner that the phases of the currents flowing through both sides of the substantial center in the direction of thickness of the coil are deviated by 180 ° from each other. When the A.C. current is supplied in such a manner, the directions of magnetic fluxes based on the currents flowing through the outside and the inside of the center are opposite to each other, and each magnetic flux offsets the other, so that the power factor and power efficiency may be improved.

It is preferable that the control of the resistance heating is conducted based on the electric resistance of the metallic foil layer between the outer end and the inner end of the coil.

The electric resistance of the metallic foil layer between the outer end and the inner end of the coil is a function of the temperature of the metallic foil layer. Accordingly, the control of the resistance heating may be conducted based on the electric resistance, without inserting heat sensors into the coil.

The external heating of the portion near the inner peripheral surface of the coil may be preferably carried out by using a metallic pipe, or a paper tube covered with a metallic sheet or a metallic net, as a core for winding the laminate web, and electric induction heating the metallic pipe or the metallic sheet or the metallic net.

In case where the portion near the inner peripheral surface of the coil is externally heated by the electric induction heating, the portion near the inner peripheral surface may be heated to, and held at, the curing temperature efficiently, readily and uniformly.

Other features and advantages of the invention will be apparent from the following description and the accompanying drawings.

Fig. 1 is an explanatory perspective view showing an example of wiring for supplying the D.C. current to the laminate coil ;

Fig.2 is a fragmentary front view of an example of a dry laminating apparatus for showing an example of a method of fitting a power feed tab into the laminate coil;

Fig. 3 is an explanatory circuit diagram of an example of a heat control apparatus for heating the laminate coil;

Fig. 4 is a fragmentary longitudinal sectional view of an apparatus for cooling forcibly the laminate coil after curing;

Fig. 5 is a front view showing an example of wiring in case where the A.C. current is supplied to the laminate coil;

Fig. 6 is a diagram showing a first example of the time - temperature relationship when a current is supplied to the laminate coil; and

Fig.7 is a diagram showing a second example of the time - temperature relationship when a current is supplied to the laminate coil.

Preferred embodiments of the invention will be described hereinafter.

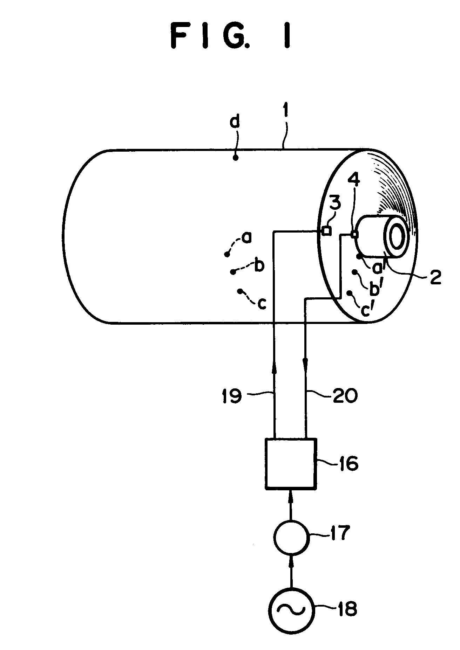

In Fig.1, reference numeral 1 represents a coil of a laminate having a three-layered structure formed by bonding a polyethylene terephthalate film and a polypropylene film on each surface of an aluminum foil with an isocyanate type adhesive in accordance with a dry laminating method.

The laminate of the coil 1 may have a four-layered structure as will be demonstrated in Practical Example 2 which will be described hereinafter. The coil temperature immediately after winding up is about 20 to 30 °C.

Reference numeral 2 represents a core for winding up the laminate thereon, which core is preferably made of a metallic pipe, e.g. aluminum or aluminum alloy pipe, preferably covered or coated with a scratch-proof layer, such as a thin paper, a thermosetting resin film, a ceramic film and so on. In case of a laminate which is not susceptible to wrinkles, however, a paper tube with a paper thickness of about 20 to 25 mm may be employed as well.

Reference numerals 3 and 4 represent power feed tabs that are clamped at the outer and inner ends of the coil 1, respectively. The tabs 3 and 4 are formed preferably from a metal foil having high electric conductivity, e.g. an aluminum foil of about 10 to 200 $\mu$m thick, and a pressure-sensitive adhesive layer coated on one side thereof.

Clamping of the tabs 3, 4 is preferably carried out in the way shown in Fig. 2. Fig. 2 illustrates the principal portions of a dry laminating apparatus, in which reference numeral 5 represents a polyethylene terephthalate web; numeral 6 a first drying oven; numeral 7 an aluminum foil web; numeral 8 a first laminating roll; numeral 9 a first cooling roll; numeral 10 an adhesive application apparatus; numeral 11 a second drying oven; numeral 12 a polypropylene web; numeral 13 a second laminating roll; numeral 14 a second cooling roll.

A dry film of an isocyanate type adhesive which had been coated with an adhesive application apparatus not shown, is formed on the upper surface of the polyethylene terephthalate web 5 which has left the first drying oven 6, except on edge portions of about 10 mm wide. The web 5 and the aluminum foil web 7 are laminated with the laminating roll 8.

Thereafter, an adhesive is applied with the adhesive application apparatus 10 onto the surface of the aluminum foil web 7 leaving uncoated edge portions of about 5 mm wide along both edges, and is dried with the second drying oven 11.

Subsequently, the polypropylene web 12 is laminated on the surface of the aluminum foil web 7 with the second laminating roll 13, to form the laminate web 15, which is wound up onto the core 2 to form the laminate coil 1.

At the start and the end of the winding, respectively, the tabs 3 and 4 may be clamped into the coil 1 by pushing the tabs 3 and 4 and bonding the pressure-sensitive adhesive layer to the edge portions of the web 5 on the upstream side of the first laminating roll 8, in such a manner that they protrude out from the side edge of the web 5 by a length of about 10 to 50 mm. Since Fig.2 shows the intermediate stage of the winding, it does not illustrate the exact state of the above clamping.

As shown further in Fig. 2, the tabs 3 and 4 may be clamped in the same manner to the polypropylene web 12 in place of the web 5. In this case, the tabs 3 and 4 come into contact with the edge portion of about 5 mm wide of the aluminum foil web 7, which edge portion is not applied with the adhesive and has electrically conductive surfaces, so that no problem is posed with the supply of an electric current.

Going back again to Fig. 1, reference numeral 16, 17 and 18 represent a D.C. power source with a controller not shown, a rectifier such as a thyristor and an A.C. power source, respectively.

Clips not shown are fitted to the tips of the lead wires 19 and 20 which are connected to the D.C. power source 16, and a closed circuit passing through the D.C. power source 16, the lead wire 19, the aluminum foil 7 in the coil 1 and the lead wire 20 is formed by clamping the tabs 3 and 4 with the clips.

A D.C. current is allowed to flow through the aluminum foil layer in the coil 1 via the power feed tabs 3, 4 so as to resistance heat the aluminum foil layer at the voltage that has been in advance determined experimentally in accordance with variables such as the dimension of the coil 1, the thickness of each layer of the laminate, and so forth.

In this way the temperature inside the coil 1 may be raised to the curing temperature such as of about 50 °C in about 30 to 90 minutes.

In this case the temperature rise delays at the portions near the outer peripheral surface, the inner peripheral surface and the side surfaces of the coil 1, due to heat radiation.

However, in case where, after resistance heating has been made until the temperature has reached substantially the curing temperature as described above, the coil 1 is placed into a thermostatic chamber, held at e.g. 50 °C, the above-described portions where the temperature rise is slow, will be heated to the curing temperature relatively quickly, since the portions are susceptible to heat transfer from the air inside the thermostatic chamber and, moreover, are subjected to heat conduction from the portion inside the coil.

Accordingly, the time necessary for curing as a whole can be shortened drastically, e.g. by about two days.

Incidentally, the resistance heating may be carried out in the thermostatic chamber for the temperature rise period, or may be employed conjointly in the thermostatic chamber during the curing period.

After the internal temperature of the coil 1 has reached the curing temperature by resistance heating, the curing of the adhesive may be conducted without placing the coil 1 into the thermostatic chamber by lowering the voltage of the power source 16 and continuing resistance heating at relatively low power for retaining the temperature.

In this case it is preferable to effect an external heating not using the thermostatic chamber (hereinafter referred to as "direct external heating"), so that the portions near the outer peripheral surface, the inner peripheral surface and the side surfaces of the coil 1 may be kept at substantially the same temperature as that at the interior of the coil 1 during the temperature rise period and/or the curing period, that is, to prevent the temperature rise at the above portions from delaying during the temperature rise period, and to prevent the above portions from cooling due to heat radiation during the curing period.

Only the direct external heating may be exerted without making the resistance heating, during the curing period. In this case, too, the direct external heating is preferably employed conjointly during the temperature rise period.

As a direct external heating method of the portions near the outer peripheral surface and the sides surface of the coil, means for covering the coil 1 with a flexible thermal membrane not shown incorporating a resistance heating element and having an inner surface held at a temperature substantially equal to, or somewhat higher, e.g. by about 20 $^\circ$C than the curing temperature, may be preferably used.

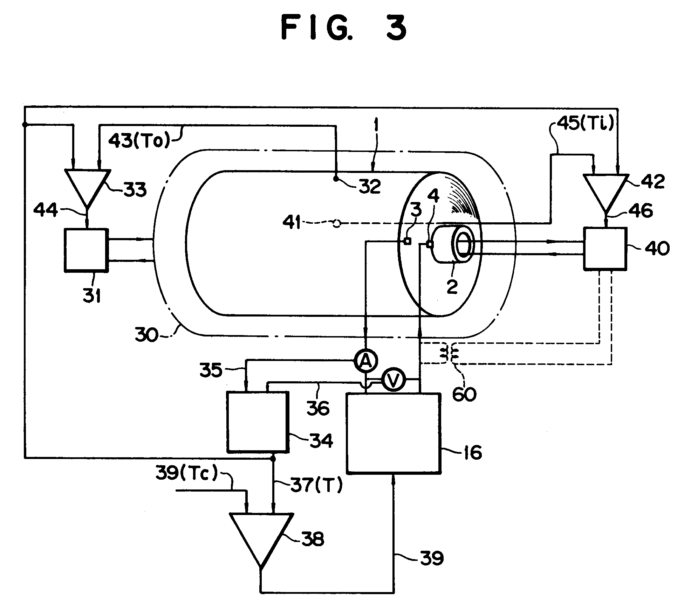

Alternatively, the coil 1 may be placed in a thermal box (refer to reference numeral 30 in Fig.3), the atmosphere temperature in which is kept at the temperature above-described by blowing a warm air into the box or incorporating a heat generating element therein.

Preferred direct external heating methods of the portion near the inner peripheral surface of the coil, are as follows:

One of the methods is to use a paper tube core 2 into which a resistance heating element is buried so as to keep the outer peripheral temperature thereof at substantially the curing temperature.

Another method is to use a paper tube core 2 whose outer peripheral surface is covered with a metallic sheet or a metallic net (preferably a net of about #100 mesh made of a stainless steel wire having a diameter of 0.1 to 0.2 mm), or to use a metallic pipe core 2, and allow an A.C. current to flow through a high frequency induction heating coil disposed inside the core 2 or through the coil 1, so as to induction heat and keep the metallic sheet, the metallic net or the metallic pipe substantially to and at the curing temperature.

In these cases, it is preferable that the currents through the heat generating element of the flexible thermal membrane, the feed current from the power source 16, and the current through the resistance heat generating element or the high frequency induction heating coil in the core 2 are controlled by using heat sensors inserted into the portions near the outer peripheral surface, the inner peripheral surface and the side surface of the coil 1, so that the temperatures of the above portions can be kept substantially at the curing temperature.

The temperatures at the portions near the outer peripheral surface and the side surfaces may be somewhat higher or lower than the set curing temperature.

When the direct external heating is conducted, it is preferable for a practical application, to control the heating conditions of the outer peripheral surface, the side surface and the inner peripheral surface of the coil 1, and the resistance heating condition based on the data obtained by conducting experimentally the above-mentioned current control, by disposing a heat sensor only at the portion near the outer peripheral surface of the coil 1, so that the temperatures at the whole portions of the coil can be kept at the set curing temperature.

A more preferable control method of the resistance heating when the direct external heating is carried out will be described hereinafter.

In Fig.3, reference numeral 30 represents a thermal box having a built-in heat generating element not shown. The thermal box 30 is fed a current from a power source 31 such as a commercial frequency A.C. power source.

Reference numeral 33 represents a comparator into which the output signal 43 of a temperature sensor 32 for measuring the outer peripheral surface temperature $T_0$ of the coil 1 and a signal 37 based on the average temperature T described hereafter of a metallic foil layer are inputted.

The comparator 33 outputs a signal 44 while $T_0$ is lower than T, to a PID type controller not shown incorporated in the power source 31, and turns ON the power source 31. The controller is adapted to control the output current of the power source 31, so that the temperatures of the portions near the outer peripheral surface and the side surface of the coil 1 may be substantially equal to the temperature T.

Reference numeral 34 represents an operating unit, which receives a current signal 35 and a voltage signal 36 of the current flowing through the metallic foil layer of the coil 1 from the power source 16 through the current feed tabs 3 and 4.

The operating unit 34 executes the following operation, and calculates the average temperature (T; $^\circ$C) of the metallic foil layer due to the resistance heating, on the basis of the principle that the specific resistance of a metal is the function of its temperature.

$$R = V/I \quad (1)$$

where

R: electric resistance of the metallic foil layer between the tabs 3 and 4

V: voltage between the tabs 3 and 4 (V)

I: current flowing through the metallic foil layer (A)

$$\rho = R \times t \times w/I \quad (2)$$

where

$\rho$: specific electric resistance of the metallic foil ($\Omega$.m)

t: thickness of the metallic foil layer (m)

w: width of the metallic foil layer (m)

I: length of the metallic foil layer between the tabs 3 and 4 (m)

$$T = f(\rho) \quad (3)$$

where

f: function representing the relationship between $\rho$ and T

The signal 37 of the temperature T converted to voltage is inputted from the operating unit 34 to the first terminal of the comparator 38. On the other hand, the signal 39 of the set curing temperature $T_c$ converted to voltage is inputted to the second terminal of the comparator 38.

The comparator 38 compares the temperature T with the temperature $T_c$, and outputs the signal 39 to the PID type controller incorporated in the power source 16 while $T < T_c$. In this manner the temperature in the coil can be controlled to the set curing temperature without inserting thermocouples into the coil, e.g. at positions corresponding to the points b and c in Fig. 1 (refer to Practical Example 1). The insertion of the thermocouples is not practical.

The following method may be also adopted. A necessary power (kw) is calculated from the heat capacity of the coil 1, the set temperature raising time and the curing temperature $T_c$, and the voltage and current to be supplied are determined from the total length, the width and the thickness of the aluminum foil layer on the basis of this power. The power source 16 may be cut off when $T = T_c$ is attained. In this case the PID control is not necessary.

Reference numeral 40 represents a power source such as a high frequency oscillator for heating the heat generating element such as the metallic net not shown covering the core 2.

Reference numeral 42 represents a comparator for receiving the output signal 45 of a temperature sensor 41 for measuring the inner peripheral surface temperature $T_i$ of the coil 1, and the signal 37 based on the average temperature T of the metallic foil layer as described above.

While $T_i$ is lower than T ($T_i < T$), the comparator 42 outputs a signal 46 to a PID type controller not shown incorporated in the power source 40, and turns ON the power source 40. The controller is adapted to control the output current of the power source 40, so that the temperature of the portion near the inner peripheral surface of the coil 1 is substantially equal to the temperature T.

By carrying out heating and temperature retention while controlling the temperatures at the portions near the outer peripheral surface, the side surfaces and the inner peripheral surface, and the interior of the coil 1 in the manner described above, the coil 1 as a whole may be heated substantially uniformly to the curing temperature and be kept at this temperature, as will be described in Practical Example 2.

In case where the laminate is of such a type whose length gets elongated with the temperature rise, e.g. a three-layered structure laminate shown in Practical Example 1, if these currents are altogether cut off after the curing, and the flexible thermal membrane or the thermal box is removed, wrinkles in the axial direction are liable to occur, because cooling starts at the outer peripheral surface of the coil 1, and, after the coil 1 has been is cooled as a whole to the room temperature, the coil 1 is strongly tightened.

To reduce the wrinkles, it is preferable to keep the temperature of the portion near the inner peripheral surface of the coil 1 a little lower the set curing temperature during the curing period, and to cool the coil gradually from the inner peripheral surface side towards the outer peripheral surface side.

This may be accomplished by cutting off first the current of the resistance heat generating element or the high frequency induction heating coil provided in the core 2, a little later cutting off the power source 16, and finally cutting off the current of the thermal box or removing the thermal box.

In case of a laminate of the type whose length gets shortened due to the temperature rise, such as a four-layered structure laminate shown in Practical Example 2, having a nylon film layer drawn longitudinally during the laminating process and susceptible to heat shrinkage, wrinkles are liable to occur in the temperature rise period and the curing period.

It is preferable to reduce the above wrinkles that a rigid metal pipe is used as a core, and in case of a paper tube core as well as the metal pipe core, the whole of the coil 1 is heated substantially uniformly and held at a substantially uniform temperature during curing, or the temperature at the coil portion near the core 2 is kept a little higher (e.g. by 10 to 20 °C) than the other portions during both the temperature rise period the curing period.

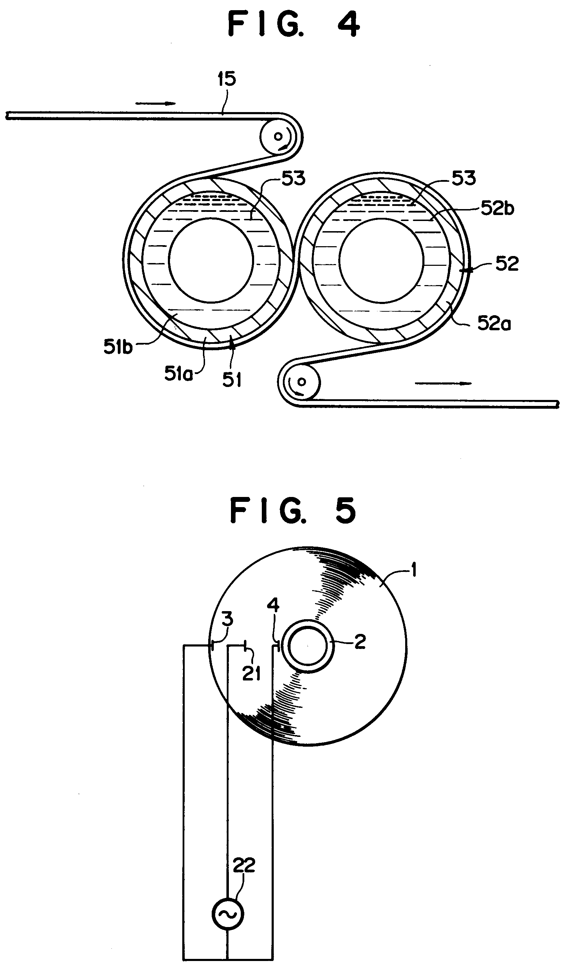

It takes a long period of time to cool naturally the coil 1 in a coil form after curing. Therefore, it is preferable to cool the coil by forced cooling such as by a blowing cold air to the outer peripheral surface and the side surface thereof, and/or passing a cold air through inside the core 2, or bringing the coil into contact with a cooling roll while rewinding, as shown in Fig. 4.

In Fig. 4, reference numeral 51 and 52 represent cooling rolls. Each cooling roll 51, 52 is provided with an outer cylinder 51a, 52a such as made of a chromium-plated copper pipe, and an inner hole 51b,52b through which a cooling water 53, e.g. at 10 °C flows.

The coil 1 (not shown in Fig.4) is unwound such that the laminate web 15 may form a S shape along the cooling rolls 51 and 52, and have a large contact area with the cooling rolls 51 and 52 as much as possible.

While the laminate web 15 is being unwound at a high velocity in an arrow direction from the coil 1 cured, e.g. at 100 °C , it is quickly cooled by the cooling rolls 51, 52, to e.g. 30 °C, and is rewound to form another coil with a rewinding apparatus not shown. The number of the cooling rolls may be one or at least three.

In case where the inner peripheral surface of the laminate coil 1 is heated by the high frequency heating, a dangerous high frequency voltage may be induced in the coil 1.

Therefore, it is preferable that the high frequency induction heating is effected only while the resistance heating is conducted, since the inner and outer ends of the coil are short-circuited high frequency-wise by the above operation, and the induced voltage becomes small.

In case where an A.C. current is directly supplied from the outer end to the inner end of the coil, as shown in Fig. 1, a power loss will be increased by the supply of a reactive power based on inductance, and the resulting rise of the power source voltage may incur a danger.

When the A.C. current is supplied, therefore, it is preferable to fit a power feed tab 21 to the center position of the coil in the direction of its thickness in addition to the power feed tabs 3, 4 as shown in Fig. 5, and to connect the tabs 3, 4 and 21 to an A.C. power source 22 provided with a controller not shown.

When the arrangement described above is employed, the phase of the current flowing through the portion of the aluminum foil layer between the tabs 3 and 21 is deviated by 180° from the phase of the current flowing through the portion of the aluminum foil layer between the tabs 4 and 21, and the magnetic fluxes based on the currents flowing through these foil layer portions offset each other, so that the reactive power decreases.

Practical examples of the invention will be described hereinafter.

Practical Example 1:

A coil 1 of a laminate formed by bonding a polyethylene terephthalate film of 12 $\mu$m thick to one side of an aluminum foil of 7 $\mu$m thick, and a polypropylene film of 70 $\mu$m thick to the other side thereof with an isocyanate type adhesive was prepared with a dry laminating method. The coil 1 had a width of 64 cm, an outer diameter of 60 cm and an inner diameter of 20 cm, and the entire length of the laminate was 3,000 m.

Power feed tabs 3 and 4 were fitted to the positions spaced apart by a distance of about 40 m from the outermost and the innermost end portions of the coil, respectively, as shown in Fig. 1, when wound into the coil.

Thermocouples were fitted to the surface of a paper tube core 2, that is, a position "a" corresponding to the point a' in Fig. 1, to the position spaced apart by 1,000 m from the innermost end of the coil, that is, a position "b" corresponding to the point b' in Fig. 1 (the distance between the point a' and the point b' in the radial direction being 95 cm), and to the position spaced apart by 2,500 m from the innermost end, that is, a position "c" corresponding to the point c' in Fig.1 (the distance between the point a' and the point c' in the radial direction being 19 cm), so that their tips may be positioned at the center in the transverse direction of the coil.

The temperature at the center in the transverse direction of the outer peripheral surface of the coil 1, that is, the point "d" in Fig.1 was measured by a radiation thermometer.

While the coil 1 was suspended by supporting both ends of the core 2 with a support member not shown, the switch of the controller of the power source 16 shown in Fig. 1 was turned ON, and a D.C. current of 200 V and 11A was supplied between the tabs 3 and 4 to resistance heat the coil 1.

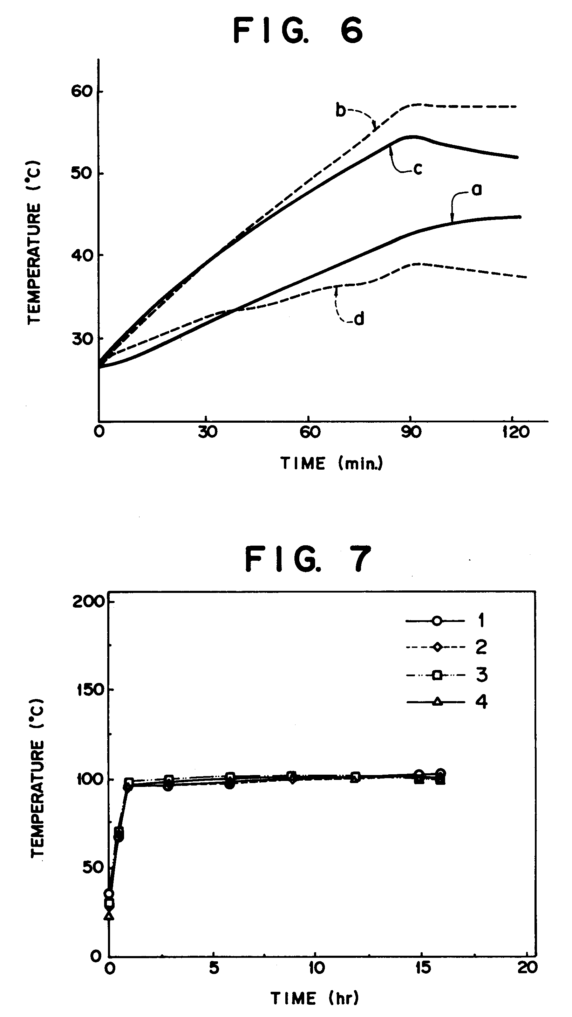

After being supplied for 90 minutes, the current was cut off. The temperature changes of the portions, that is, the positions a, b, c and d during the period, are shown by curves a, b, c and d in Fig.6, respectively.

As shown in Fig. 6, it can be understood that the lowest temperature rise portion substantially at the center in the direction of both thickness and width of the coil 1 is heated to 50 °C in the course of about 70 minutes.

A similar coil 1 without the thermocouples fitted thereto was resistance heated for 70 minutes under the same condition as described above, and was stored immediately thereafter in a thermostatic chamber at 50 °C for three days so as to cure the adhesive. After curing the coil 1 was taken out from the thermostatic chamber and allowed to cool.

Test pieces were cut out from the laminate portions corresponding to the outer end, the center and the inner end of the coil after cooling, and their peel bonding strength was tested with a peeling rate of 300 mm/min. All the test results were found normal.

Practical Example 2:

Two coils 1 of a four-layered structure laminate formed by bonding an outer polyethylene terephthalate film of 12 $\mu$m and a inner nylon film of 15 $\mu$m thick onto the one side of an aluminum foil of 7 $\mu$m thick, and a polypropylene film of 50 $\mu$m thick to the other side thereof with an isocyanate type adhesive were prepared with a dry laminating method.

The coils 1 had a width of 104 cm, an outer diameter of 60 cm and an inner diameter of 20 cm and the entire length of the laminate was 3,500 m.

One of the coils 1 was wound onto a paper tube core 2 having an outer diameter of 23 cm and a paper thickness of about 25mm.

Another coil 1 was wound onto an aluminum pipe core 2 having an outer diameter of 23 cm and an aluminum thickness of 5 mm.

Power feed tabs 3 and 4 were fitted to the positions spaced apart by about 10 m from the outermost end and the innermost end of the coil, respectively, in accordance with the method shown in Fig.1, when the laminate was wound into the coil.

A thermocouple 41 was fitted onto the outer surface of the core 2, and a thermocouple 32 was fixed onto the outer peripheral surface of the coil, so that their tips may be positioned at the center in the transverse direction of the coil, as shown in Fig.3.

In case of the paper tube core 2, an induction heating coil not shown was inserted into the core 2, and a metal net of a #100 mesh formed from a stainless steel wire of 0.1 mm diameter was wound on the outer surface of the core 2.

A thermal box 30 used was provided a build-in resistance heating element, an air stirrer, a core support member provided therein and a hinged upper lid. A D.C. power source was used as the power source 16, and an A.C. power source of 50 Hz and 200 V was used as the power source 31. A high-frequency oscillator of 30 KHz, and 2 KW was used as the power source 40, and connected to the induction heating coil described above.

The arrangement in case of the aluminum pipe core 2 was similar as that in case of the paper tube core 2, except that the induction heating coil and the metallic net were not used, and an A.C. power source of 50 Hz was employed as the power source 40 which was connected in series to the power source 16 via a transformer 60, as shown by dotted lines in Fig. 3, so as to induction heat the aluminum pipe core 2 with the output of about 600 W.

Each coil 1 was placed into the thermal box 30 as shown in Fig. 3, and was suspended by supporting both ends of the core 2 by means of the core support member not shown.

So as to measure the temperature distribution within the coil 1, thermocouples were inserted during winding at the positions spaced apart by the distance of 1,000 m, 2,000 m and 3,000 m from the innermost end of the coil, so that the tips may be positioned at the center in the transverse direction of the coil.

The curing temperature $T_c$ and the curing time were set to 100 °C and 15 hours, respectively, and the curing of each coil 1 was carried out by the control system shown in Fig. 3. It was found that the temperatures during the temperature rise period and the curing period were substantially uniform throughout the coil, as shown in Fig. 7.

In Fig. 7, lines 1, 2, 3 and 4 represent the temperatures at the core surface and the positions spaced apart by 1,000 m, 2,000 m, and 3,000 m from the innermost end of the coil, respectively.

In case of the paper tube core, the powers that were supplied from the power sources 16, 31 and 40 during the temperature rise period were 10.2 KW (constant), 2.0 KW (initial value; and dropped gradually thereafter) and 1.6 KW (initial value; and dropped gradually thereafter), respectively. The feed power of the power source 16 was 0, and the feed powers from the power sources 31 and 40 were each 300 to 500 W, during the curing period.

In case of the aluminum pipe core, the powers that were supplied from the power sources 16, 31 and 40 during the temperature rise period were 10.2 KW (constant), 2.0 KW (initial value; and dropped gradually thereafter) and 600 W (initial value; and dropped gradually thereafter), respectively. The feed power of the power source 16 was 0, and the feed powers from the power sources 31 and 40 were 300 to 500 W and 150 to 250 W, respectively,during the curing period.

After curing, the upper lid of the box 30 was opened, and the coil 1 was taken out. While the coil 1 was rewound at a rate of 100 m/min., it was cooled forcibly with the cooling rolls 51, 52 of 100cm diameter, through which a cooling water of 10 °C flowed, as shown in Fig. 4. The laminate web temperature immediately after the roll 52 was 30 °C.

After cooling, test pieces were cut out from both edges and the center in the transverse direction of the laminate portions corresponding to the outer end, the center and the inner end of the coil, and their peel bonding strength was measured with a peeling rate of 300 mm/min. All of the test results exhibited normal values.

In case of the aluminum core and the paper core, a practically unusable portion due to remarkable wrinkles were generated along the length of about 40 m and 300 m, respectively from the innermost end of the coil.

The present invention is not limited to the embodiments described above. For example, the plastic film and the metallic foil may be appropriate ones. In other words, the metallic foil layer may be an electrolytic iron foil or a steel foil. The number of plastic film and metallic foil layers forming the laminate may be arbitrary.

Furthermore, a method which blows hot or warm air through the inside the core 2, and keeps the core temperature substantially at the curing temperature may be employed as the direct external heating method for the portion near the inner surface of the coil.

## Claims

1. A method of curing an adhesive in a laminate coil comprising metallic foil and plastic film layers bonded to each other with a reactive curing type adhesive, characterized in that a current is supplied to the metallic foil layer between the outer end and the inner end of the laminate coil, so as to resistance heat the metallic foil layer, at least until the laminate coil has been heated to about the curing temperature.

2. A method of curing an adhesive in a laminate coil according to claim 1, wherein a core for winding up a laminate into the laminate coil is made of a metallic pipe.

3. A method of curing an adhesive in a laminate coil according to claim 1, wherein portions near an outer peripheral surface, a side surface and/or an inner peripheral surface of the laminate coil are heated externally at least during a curing period.

4. A method of curing an adhesive in a laminate coil according to claim 1 or 3, wherein the laminate coil is cooled forcibly after curing.

5. A method of curing an adhesive in a laminate coil according to claim 4, wherein a forced cooling is carried out by bringing an uncoiled laminate portion into contact with a cooling roll while the laminate coil is uncoiled.

6. A method of curing an adhesive in a laminate coil according to claim 1 or 3, wherein the current supplied to the metallic foil layer is a D.C. current.

7. A method of curing an adhesive in a laminate coil according to claim 1 or 3, wherein the current supplied to the metallic foil layer is an A.C. current, and phases of the currents flowing through both sides of a substantial center in a direction of thickness of the laminate coil are deviated by 180° from each other.

8. A method of curing an adhesive in a laminate coil according to claim 1 or 3, wherein a control of the resistance heating is conducted based on an electric resistance of the metallic foil layer between an outer end and an inner end of the laminate coil.

9. A method of curing an adhesive in a laminate coil according to claim 1 or 3, wherein an external heating of the portion near the inner peripheral surface of the laminate coil is carried out by using a metallic pipe, or a paper tube covered with a metallic sheet or a metallic net, as a core for winding the laminate into the laminate coil, and electric induction heating the metallic pipe or the metallic sheet or the metallic net.

# F I G. I

# FIG. 2

# FIG. 3

# F I G. 4

# F I G. 5

# FIG. 6

# FIG. 7